# EUROPEAN PATENT APPLICATION

(11) **EP 2 933 054 A1**
(43) Date of publication of application: **21.10.2015**
(21) Application number: 15164086.9
(22) Date of filing: 17.04.2015
(51) Int. Cl.: B23Q 3/06, B23Q 11/00, B25B 1/24

(54) **APPARATUS AND METHOD FOR VIBRATION MITIGATION**

(30) Priority: 17.04.2014 GB 201406921
(71) Applicant: Advanced Manufacturing (Sheffield) Limited, Rotherham S60 5TR (GB)
(72) Inventor: Geng, Zunmin, Notthingham, Nottinghamshire NG8 1JQ (GB)
(74) Representative: Mohun, Stephen John

(57) **Abstract**

A component to be machined is mounted in a mounting assembly comprising first and second clamping members 10, 18 arranged to clamp the component 14 between them, and at least one attenuator 12, 16 which provides a damping effect on vibrations in the component arising from the machining. The attenuator 12, 16 is in the form of a sheet or porous damping material, impregnated with machining fluid so as to form a matrix of distributed Helmholtz resonators 22-28.

## Description

The present invention relates to apparatus and a method for vibration mitigation in a manufacturing process, and is concerned particularly, although not exclusively, with apparatus and a method of damping vibration in a thin-walled part during a machining process.

When machining thin-walled components, such as aerofoils, the component itself is clamped between two supports so that a portion of the component is exposed to the machining tool. In the case of a cast aerofoil, a blade portion may be clamped so that a root portion can be precisely machined to a desired profile. Vibrations from the action of the tool can cause damage to the component if they are not adequately damped. Because the component has a thin wall it has very little supporting stiffness and accordingly surface vibrations as standing waves can be amplified and can produce a severe acoustic response as a travelling wave in the surface of the component.

One previously considered approach is the so-called 'Melting-Wax' technique, in which wax is used to fill the geometric cavity enclosed between the aerofoil component and supporting-fixture so as to supply sufficient stiffness and damping up on the aerofoil surface to mitigate machining induced vibration. However, there are several significant disadvantages with this method. Firstly, in the process of melting-wax solidification, the wax medium can shrink significantly and therefore can cause mechanical distortion of the thin-walled aerofoil components to be machined. Secondly, this method needs special equipment to thermally or chemically melt the wax into a liquid state, fill it into the component-fixture enclosure before machining operations, re-melt the solidified wax medium and remove it after the machining operations. This causes a toxic medium which may be harmful to the health of operatives and which can pollute the environment. Also, the increased machining cycle-time and relevant costs make the process very low in cost-efficiency, according to existing industrial standards.

Accordingly, embodiments of the present invention seek to provide apparatus and a method for the mitigation of vibration in a machining process, in which at least some of the disadvantages of the prior art are addressed.

The present invention is defined in the attached independent claims, to which reference should now be made. Further, preferred features may be found in the sub-claims appended thereto.

According to one aspect of the present invention, there is provided a mounting assembly for mounting a component to be machined, the mounting assembly comprising first and second clamping members arranged in use to clamp the component therebetween, and at least one attenuator arranged in use to provide a damping effect on vibrations in the component arising from the machining of at least a part of the component, wherein the attenuator comprises at least one Helmholtz resonator.

The attenuator is preferably a passive attenuator and may be adaptive to different frequencies of vibration.

The Helmholtz resonator may include a swinging fluid plug in an aperture and may include a connected fluid volume. The fluid plug and/or the connected fluid volume may comprise machining coolant fluid or another fluid such as air.

The attenuator may comprise a porous material.

In a preferred arrangement the attenuator comprises a plurality of Helmholtz resonators. At least some of the pores of the attenuator material may comprise the Helmholtz resonators. The plurality of Helmholtz resonators may include apertures of differing diameters and/or differing depths.

The attenuator may be located between the component and one of the first and second clamping members in use. Alternatively, there may be an attenuator located between the component and each of the first and second clamping members in use.

The invention also provides a method of mounting a component for machining, the method comprising placing the component between first and second clamping members with an attenuator between the component and at least one of the clamping members, which attenuator comprises at least one Helmholtz resonator for damping vibrations in the component arising from the machining of at least a part of the component.

Preferably the method comprises placing the component between first and second clamping members with an attenuator between the component and each of the two clamping members.

The attenuator may be according to any statement herein.

The component may be a thin-walled component. In a particularly preferred arrangement, the component comprises an aerospace component such as a component for an aero engine. More particularly the component may comprise a rotor or a stator vane.

The invention may include any combination of the features or limitations referred to herein, except such a combination of features as are mutually exclusive, or mutually inconsistent.

A preferred embodiment of the present invention will now be described, by way of example only, with reference to the accompanying diagrammatic drawings, in which:
- Figures 1 to 5: show schematically stages in the mounting of a component to be machined in a mounting assembly according to an embodiment of the present invention; and
- Figure 6: shows schematically a damping mechanism of the apparatus of Figures 1 to 5.

Embodiments of the present invention are concerned with the application of Helmholtz resonators to machining-induced vibration or for structure-borne acoustic control, particularly in thin-walled components such as aerofoils. More particularly, the embodiment described herein utilises a Helmholtz-resonator based perforated vibration absorber.

The use of Helmholtz resonators as a classical method for air-borne acoustic noise reduction and control is well known. Typically multiple holes, such as can be found in porous material, act as tiny resonators. The design of anechoic chamber is one example of this.

Helmholtz resonators are acoustic systems that consist of a swinging fluid plug and a connected, much larger, fluid volume. They can have a variety of forms, including an empty wine bottle, the corpus of a string instrument, bass reflex enclosures of loudspeakers and wall coverings made of perforated wood or gypsum boards. A simple way to explain the geometry and the functionality of a Helmholtz resonator is the example of an empty wine bottle. The air in the bottleneck creates the said air plug, and the air in the rest of the bottle functions as the connected volume. The air plug has an acoustic mass, which results from its geometry and specific air density. It piles *[?]* on the springy air pillow of the rest of the bottle volume. Together they comprise a swinging system with a specific resonance frequency.

Helmholtz resonators are frequently exploited to amplify sound. For example, in the case of string instruments, too little sound energy would be emitted through the swinging of strings alone. Sufficient loudness is only achieved after connection of strings to the corpus with its openings.

In order for a Helmholtz resonator not to amplify sound, but to absorb it, the swinging air in the opening must be slowed down through friction. This is mostly done by means of a thin fleece glued behind the opening, sometimes also equipped with an additional layer of mineral wool or foam.

In the embodiment described below, concerning particular structure-borne acoustics, or aerofoil wave-propagation, or aerofoil vibration control application, porous damping material is used with uniformly spread micro-holes with OD = 0.1mm to 0.5mm and depth >= 5.0mm, where the holes work as Helmholtz resonators with machining-coolant fluid acting as friction to the holes, so as to absorb the aerofoil vibration energy rather than amplify it.

For air-borne acoustic control, porous absorber materials include all porous and filamentary materials such as textiles, fleece, carpets, foam, cotton and special acoustic plaster. They all absorb sound energy by slowing down swinging of the air particles through friction.

By illustration, if a plane sound wave is considered, which is incident perpendicularly on a massive wall, because there is no absorption, it is fully reflected. The incident and the reflected wave superimpose according to the principle of superposition. Therefore we always measure the sum of the sound pressures or sound velocities of both waves and the result is a standing wave. Air cannot move in the immediate vicinity of the wall, which is assumed to be immovable. The sound velocity of a plane wave directly at the wall must be zero. In contrast, high sound pressure can develop there. The sound velocity reaches its first maximum at a distance of 1/4 of the wavelength from the wall.

A porous absorber can slow down the air particles in the most effective way if they have high sound velocity. If a porous absorber is mounted directly onto the wall, it must have a certain thickness, in order to be able to absorb sound waves up to a certain lower limiting frequency. On the other hand, if it is mounted at a certain distance from the wall, it can be made correspondingly thinner. Manufacturers currently make use of this effect in acoustic ceilings. The absorbing material is of equally high importance. The most important parameter is the flow resistance. In this particular application of structure-borne acoustics, or aerofoil wave-propagation, or aerofoil vibration control, porous damping material is used with uniformly spread micro-holes in OD = 0.1mm to 0.5mm and depth >= 5.0mm, compression pressure on or between the damping material to be 0.5 bar to 1.0 bar, where the holes are forced to work as Helmholtz resonators with machining-coolant fluid acting as friction medium to the holes, so as to absorb the aerofoil vibration energy rather than amplifying it to mitigate machining-induced vibration.

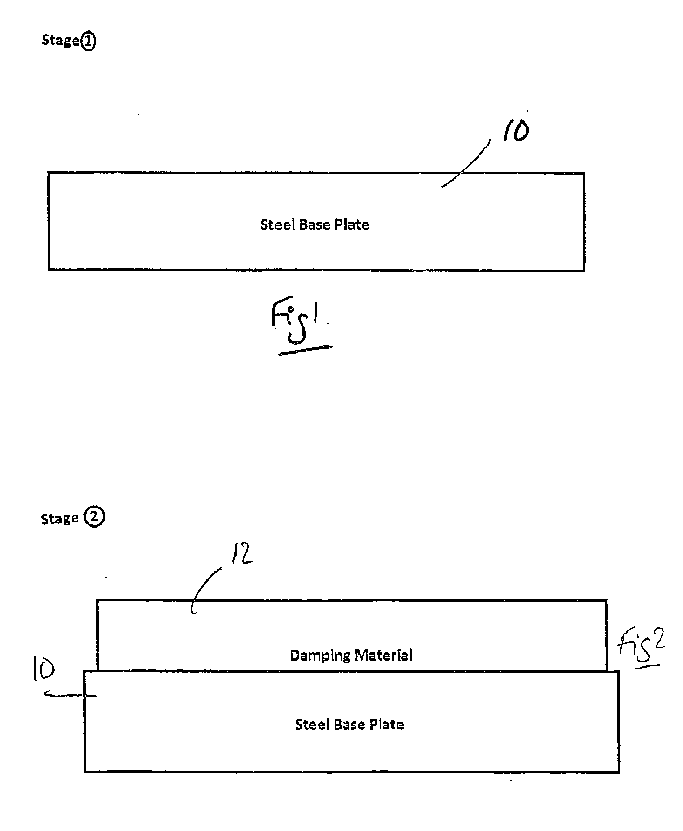

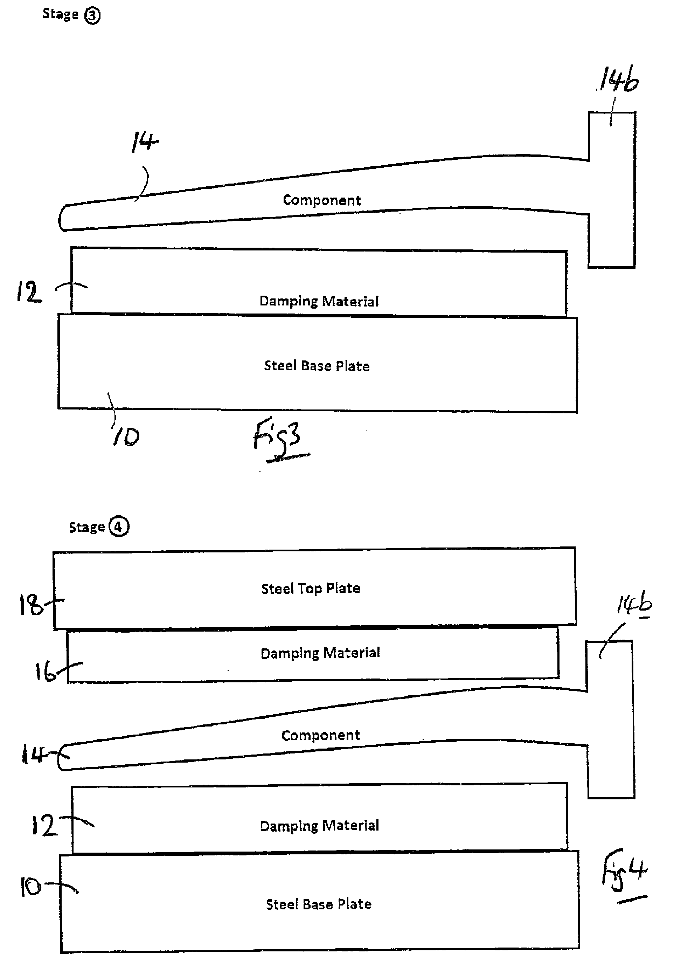

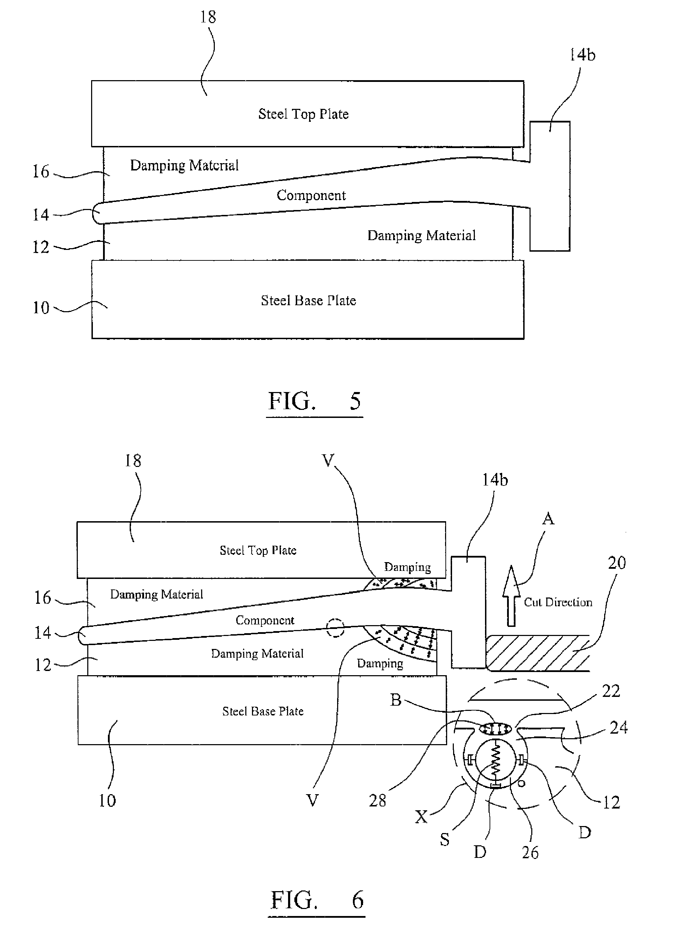

Turning to Figures 1 to 6, these show the stages in the formation of a mounting assembly for holding a component to be machined, in accordance with an embodiment of the present invention. The first element is a steel base plate 10 on which is placed an attenuator in the form of a sheet 12 of damping material, as will be described later. Then the component 14 is placed on the sheet 12. The component 14 is, in this example, a stator blade of cast titanium alloy for a jet engine. It has an aerofoil portion 14a and a root 14b, which root is to be machined to a precise finish. Next a further attenuator in the form of a sheet of damper material 16 is placed over the component and finally a further steel plate 18 is placed over the damper material to form a sandwich structure, the steel plates are urged together and the damper material forms an intimate contact with the component (**Figure 5**).

The damping material 16 and 12 is made of viscous-plastic material. Porous holes having an outside diameter in the range 0.1mm to 0.5mm, and depth >= 5.0mm, and preferably in the range 20mm to 40mm, are uniformly spread over the material at about 50 to 100 per square centimetre. These pores act as Helmholtz resonators. The damping materials on both sides of the aerofoil are applied with a compression pressure of 0.5 bar to 1.0 bar (50000 to 100000 Pa), whereby the holes are forcibly pumped full of machining-coolant fluid which acts as friction medium to the holes. This causes the aerofoil vibration energy to be absorbed rather than amplified, so as to mitigate machining induced vibration problems.

The damping sheet is pre-formed by machining or moulding to adaptively fit the curved surface of the component.

The pore size is variable, and the diameter determines the frequency of vibration that will be damped. Rather than tune to a narrow frequency band, a distribution of pore diameters will ensure that a range of frequencies will be damped.

**Figure 6** shows schematically the effect of vibrations V caused by the action of a tool 20 as it moves in the direction of arrow A to machine the root 14b of the component 14. Detail X is an enlarged portion of the surface of attenuator 12 which will now be described.

The attenuator/damper layers 12 and 16 are porous, and at the component-facing surfaces the pores comprise a plurality of recesses 22 each of which has a neck portion 24 which leads to a cavity 26. In the neck 24 fluid, which in this case is machining coolant, forms a fluid plug 28. A reservoir of the fluid in the cavity 26 acts upon the plug 28 as a spring, represented schematically as S, so that the plug swings inwards and outwards with the vibrations induced in the surface of the component 14 by the action of the tool 20. The direction of the swinging is indicated by arrows B. Walls of the cavity act as dampers, represented schematically as D.

There are a great number of these tiny Helmholtz resonators across the component-facing surfaces of the attenuators 12 and 16 and in use they have the effect of damping surface vibrations induced in the component 14 by the action of the tool as it machines the root 14b.

Although not shown in Figure 6, the assembly is located in a housing containing machining fluid, so that the sheets of damping material 12, 16 are immersed in machining fluid.

During machining, the root is clamped directly with pins (not shown) so that static loads are applied to the root itself. However the apparatus and method described herein obviates the need for any direct clamping of the component body - in this case the stator blade - and this avoids the creation of imperfections in the curved surfaces that would otherwise arise and that would often lead to rejection of the component.

Whilst endeavouring in the foregoing specification to draw attention to those features of the invention believed to be of particular importance, it should be understood that the applicant claims protection in respect of any patentable feature or combination of features referred to herein, and/or shown in the drawings, whether or not particular emphasis has been placed thereon.

## Claims

1. A mounting assembly for mounting a component to be machined, the mounting assembly comprising first and second clamping members arranged in use to clamp the component therebetween, and at least one attenuator arranged in use between at least one of the clamping members and the component to provide a damping effect on vibrations in the component arising from the machining of at least a part of the component, wherein the attenuator comprises at least one Helmholtz resonator.

2. A mounting assembly according to Claim 1, wherein the attenuator is a passive attenuator.

3. A mounting assembly according to Claim 1 or 2, wherein the Helmholtz resonator includes a swinging fluid plug in an aperture and a connected fluid volume.

4. A mounting assembly according to Claim 3, wherein the fluid plug and/or the connected fluid volume comprise machining coolant.

5. A mounting assembly according to any of Claims 1 to 4, wherein the attenuator comprises a porous material.

6. A mounting assembly according to Claim 5, wherein, in use, at least some of the pores comprise Helmholtz resonators.

7. A mounting assembly according to any of Claims 1 to 6, wherein there is a plurality of Helmholtz resonators which have apertures of differing diameters and/or differing depths.

8. A mounting assembly according to any of Claims 1 to 7, wherein an attenuator is located between the component and each of the first and second clamping members in use.

9. A method of mounting a component for machining, the method comprising placing the component between first and second clamping members with an attenuator between the component and at least one of the clamping members, which attenuator comprises at least one Helmholtz resonator for damping vibrations in the component arising from the machining of at least a part of the component.

10. A method according to Claim 10, wherein the method comprises placing the component between first and second clamping members with an attenuator between the component and each of the two clamping members.

11. A mounting assembly or a mounting method according to any of the preceding claims, wherein the component is a thin-walled component.

12. A method of machining a component, wherein the component is clamped in an assembly according to any of claims 1 to 9, the attenuator being immersed in machining oil or other fluid.
